(19) Europäisches Patentamt

European Patent Office

Office européen des brevets

(11) **EP 0 721 793 B1**

(12) **EUROPÄISCHE PATENTSCHRIFT**

(45) Veröffentlichungstag und Bekanntmachung des Hinweises auf die Patenterteilung:
**11.11.1998 Patentblatt 1998/46**

(51) Int. Cl.$^6$: **B01D 53/86**

(21) Anmeldenummer: **95115409.5**

(22) Anmeldetag: **29.09.1995**

(54) **Verfahren zur Behandlung von Brüden, die Ammoniak und Schwefelwasserstoff enthalten**

Treatment process for vapours containing ammonia and hydrogen sulfide

Procédé pour traiter des vapeurs qui contiennent de l'ammoniac et de l'hydrogène sulfuré

(84) Benannte Vertragsstaaten:
**BE DE GB IT NL**

(30) Priorität: **16.01.1995 DE 19501108**

(43) Veröffentlichungstag der Anmeldung:
**17.07.1996 Patentblatt 1996/29**

(73) Patentinhaber: **Krupp Uhde GmbH**
**44141 Dortmund (DE)**

(72) Erfinder:
• **Minak, Hans-Peter, Dr. Dipl.-Ing.**
**D-45144 Essen (DE)**

• **Gross, Manfred, Dr. Dipl.-Chem.**
**D-46282 Dorsten (DE)**

(74) Vertreter:
**Honke, Manfred, Dr.-Ing. et al**
**Patentanwälte**
**Andrejewski, Honke & Sozien,**
**Postfach 10 02 54**
**45002 Essen (DE)**

(56) Entgegenhaltungen:
**EP-A- 0 521 308**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Behandlung von Brüden, die Ammoniak und Schwefelwasserstoff enthalten, insbesondere zur Behandlung von Brüden, die bei der Destillation von bei der hydrierenden Behandlung von Rohölfraktionen anfallenden Prozeßwässer oder bei der Gasbehandlung in Kokereien anfallen. Die Behandlung erfolgt hauptsächlich zum Zwecke der umweltgerechten Entsorgung der Brüden.

Verfahren zur Behandlung von Brüden, die Ammoniak und Schwefelwasserstoff enthalten, sind umfangreich bekannt, und zwar insbesondere auch zur Behandlung von Brüden, die bei den einleitend angegebenen Prozessen anfallen. Im einzelnen ist zu diesem aus der Praxis bekannten Stand der Technik folgendes vorzutragen:

Bei der hydrierenden Behandlung von Rohölfraktionen sowie bei den Prozessen der Gasbehandlung in Kokereien fallen Prozeßwässer an, die mit toxischen Komponenten wie $NH_3$, $H_2S$ und HCN kontaminiert sind. Vor der weiteren Reinigung dieser Prozeßwässer in einer biologischen Abwasserreinigungsanlage oder vor einer Rückführung in andere technologische Prozeßstufen werden diese Prozeßwässer einem Destillationsprozeß unterzogen, der in der Technik allgemein als Sauerwasserstrippung bezeichnet wird. Die toxischen Komponenten fallen bei diesem Prozeß als Brüden an, die entsprechend der Temperatur des Dephlegmators mit Wasserdampf gesättigt sind. Vor einer Weiterverarbeitung dieser Brüden sind die darin enthaltenen toxischen Komponenten in nichttoxische umzuwandeln. Je nach den in Raffinerien oder Kokereien angewendeten Rohstoffen enthalten die Brüden der Sauerwasserstrippung unterschiedliche Konzentrationen an $NH_3$, $H_2S$, HCN, $CO_2$, organischen Schwefelverbindungen und Kohlenwasserstoffen, die dazu fuhren, daß es kein einheitliches Verfahren der umweltgerechten Entsorgung dieser Brüden gibt. Bei geringem $NH_3$- und hohem $H_2S$-Gehalt können die Brüden in einer Clausanlage verarbeitet werden, wobei aus dem $H_2S$ elementarer Schwefel erzeugt wird, während bei einem hohen $NH_3$- und geringem $H_2S$-Gehalt eine katalytische $NH_3$-Spaltung zur selektiven Zersetzung des $NH_3$ sowie des HCN bei nur geringer Schwefelbildung fuhrt. Bei höheren $NH_3$-Konzentrationen im Bereich von > 20 % und höheren $H_2S$-Gehalt im Bereich von 5 bis 40 Vol.-% in den trockenen Brüden lassen sich $NH_3$ und HCN nicht mehr selektiv gegenüber $H_2S$ zersetzen, denn es entstehen zwangsläufig größere Mengen im Bereich von über 100 ppm an elementarem Schwefel in Form von $S_6$ und $S_8$, der bei der Weiterverarbeitung des Prozeßgases bei Temperaturen unterhalb des Festpunktes von Schwefel zu Verstopfungen von Anlagen führt und damit keine kontinuierliche Prozeßfuhrung erlaubt.

In EP-A-0521308 wird ein Verfahren zur gemeinsamen Aufarbeitung von $NH_3$- und/oder $H_2S$-haltigen Prozeßabwässern sowie natriumsulfidhaltiger Natronlauge zum Zwecke der Weiterbehandlung in einer biologischen Endreinigungsstufe, offenbart, in dem man

a) die natriumsulfidhaltige Natronlauge durch Zugabe von Schwefelsäure bis auf einen $p_H$-Wert zwischen 3,0 und 7,0 ansäuert,
b) die angesäuerte Ablauge mit den zu behandelnden $NH_3$- und/oder $H_2S$-haltigen Prozeßabwässern vereinigt und die zusammengeführten Stoffströme im indirekten Wärmeaustausch mit dem aus der dem $NH_3$- und $H_2S$-Abtrieb dienenden Abtriebskolonne ablaufenden Abwasser bis auf eine Temperatur erwärmt, die der Temperatur entspricht, die gleichgewichtsbedingt am Kopf der Abtriebskolonne herrscht,
c) die entsprechend erwärmte Flüssigkeit am Kopf in die Abtriebskolonne einleitet, in der $NH_3$ und $H_2S$ in an sich bekannter Weise mit Wasserdampf abgetrieben werden, wobei die anfallenden $NH_3$- und/oder $H_2S$-haltigen Brüden über Kopf aus der Abtriebskolonne abgezogen werden, während das aus dem Sumpf der Kolonne ablaufende Abwasser nach entsprechender Abkühlung der biologischen Endreinigungsstufe zugeführt wird,
d) die abgetriebenen $NH_3$- und/oder $H_2S$-haltigen Brüden einer Wasserdampfkondensation unterwirft und anschließend in einer Claus-Anlage weiterbehandelt, die mit einem $NH_3$-Spaltkatalysator ausgerüstet ist, und
e) das aus der Claus-Anlage austretende Restgas vor der Ableitung in die Atmosphäre einer Nachbehandlung unterwirft.

Der Erfindung liegt das technische Problem zugrunde, Brüden, die wie eingangs beschrieben anfallen, so zu behandeln, daß ein verwertbares Prozeßgas entsteht, und zwar in einem kontinuierlichen Verfahren ohne Störung durch anfallenden elementaren Schwefel.

Zur Lösung dieser Aufgabe ist Gegenstand der Erfindung ein Verfahren zur Behandlung von Brüden, die Ammoniak und im Bereich von 5 bis 40 Vol.-% in den trockenen Brüden Schwefelwasserstoff enthalten, insbesondere zur Behandlung von Brüden, die bei der Destillation von bei der hydrierdenden Behandlung von Rohölfraktionen anfallende Prozeßwässer oder bei der Gasbehandlung in Kokereien anfallen, mit den Verfahrensschritten

1.1) die Brüden werden in einen Spaltofen eingeführt, der mit einer Temperatur im Bereich von 1000° bis 1200° C mit reduzierender Atmosphäre betrieben wird, wobei ein Prozeßgas entsteht und die Entstehung von elementarem Schwefel aus dem in den Brüden enthaltenen Schwefelwasserstoff in Kauf genommen wird,

2

1.2) das Prozeßgas wird über einen Spaltkatalysator geführt und das Ammoniak wird dabei zu einem Wasserstoff/Stickstoff-Gemisch gespalten,

1.3) das Prozeßgas mit dem gespaltenen Ammoniak wird auf eine Temperatur im Bereich von 250° bis 350° C abgekühlt,

1.4) das abgekühlte Prozeßgas wird über einen Hydrierreaktor geleitet und der darin enthaltene Schwefel wird zu Schwefelwasserstoff hydriert,

wobei das den Hydrierreaktor verlassende Prozeßgas der Weiterverarbeitung zugeführt wird. Nach bevorzugter Ausführungsform der Erfindung wird das abgekühlte Prozeßgas in dem Hydrierreaktor mit einem Hydrierkatalysator in Kontakt gebracht. Ohne weiteres kann das hydrierte Prozeßgas einem selektiven Absorptionsprozeß unterworfen und dadurch der Schwefelwasserstoff aus dem Prozeßgas entfernt werden. Katalysatoren, die für die Ammoniak-Spaltung oder die Hydrierung geeignet sind, sind bekannt und bewährt, insbesondere sind die in den Patentansprüchen 4 und 5 angegebenen Katalysatoren geeignet.

Die erreichten Vorteile sind darin zu sehen, daß das erfindungsgemäße Verfahren eine katalytische Ammoniak-Spaltung von Brüden der eingangs angegebenen Provenienz, insbesondere von Sauerwasserstripper-Brüden, mit einem Schwefelwasserstoffgehalt im Bereich von 5 bis 40 Vol.-% möglich ist, ohne daß die kontinuierliche Weiterverarbeitung des bei der Ammoniak-Spaltung entstehenden Prozeßgases durch kondensierenden oder sich verfestigenden elementaren Schwefel verhindert wird.

Im folgenden wird die Erfindung anhand eines Ausführungsbeispiels und Fließschemas einer Anlage für die Durchführung des erfindungsgemäßen Verfahrens ausführlicher erläutert. Es versteht sich, daß Nebeneinrichtungen in dem Fließschema nicht dargestellt sind.

Das mit $NH_3$, $H_2S$ und anderen Komponenten kontaminierte Prozeßwasser 1 wird in einen bekannten Sauerwasserstripper 2 gegeben, wobei die flüchtigen Komponenten wie $NH_3$, $H_2S$, $CO_2$, HCN, organische Schwefelverbindungen und Kohlenwasserstoffe durch Dampf 3 abgestrippt werden. Im Dephlegmator 4 wird durch Kühlwasser die Brüdentemperatur eingestellt. Vorzugsweise soll die Temperatur 60 bis 90° C betragen, da ein höherer Anteil an tensiongebundenem Wasserdampf in den Brüden 5 eine Versalzung der Brüdenleitung und von Brennerteilen sowie eine Rußbildung im nachfolgenden Spaltreaktor 8 unterdrückt.

Für das gewählte Beispiel entstehen folgende Brüden 5 etwa der folgenden Zusammensetzung:

| | |
|---|---|
| $NH_3$ | 13,2 kmol/h |
| $H_2S$ | 5,0 kmol/h |
| R-SH | 0,5 kmol/h |
| HCN | 0,1 kmol/h |
| $H_2O$ | 13,3 kmol/h |

Die Brüden 5 werden zusammen mit einem Heizgas 6 und der Verbrennungsluft 7 in den Spaltreaktor 8 geführt, wobei die erforderliche Temperatur in der Brennkammer des Spaltreaktor 8 durch Verbrennung des Heizgases unter reduzierender Atmosphäre eingestellt wird. Das sich einstellende Prozeßgas besitzt eine Temperatur von 1200° C, wenn 7 kmol/h Heizgas mit einem Heizwert von 550 MJ/kmol mit 43 kmol Luft verbrannt werden.

Das Prozeßgas strömt aus der Brennkammer des Spaltreaktors 8 über den Spaltkatalysator 9. Dabei finden im wesentlichen die folgenden Reaktionen statt:

$$2\,NH_3 \rightarrow N_2 + 3\,H_2 \tag{1}$$

$$2\,HCN + 2\,H_2O \rightarrow 2\,CO + N_2 + 3\,H_2 \tag{2}$$

Das Prozeßgas besitzt nach dem Spaltkatalysator 9 etwa die Zusammensetzung:

| | |
|---|---|
| $H_2S$ | 5,65 Vol.-% |
| $H_2$ | 16,95 Vol.-% |
| $N_2$+Ar | 45,1 Vol.-% |
| CO | 3,0 Vol.-% |
| $CO_2$ | 2,8 Vol.-% |
| $H_2O$ | 26,5 Vol.-% |

In Nebenreaktionen entstehen im Spaltofen 8 aus $H_2S$ teilweise elementarer Schwefel im wesentlichen der Form

$S_6$ und $S_8$ nach der Gleichung:

$$_x(H_2S) \rightarrow xH_2 + S_x \qquad (3)$$

Durch weitere Nebenreaktionen entsteht unter den reduzierten Bedingungen in der Brennkammer des Spaltofens 8 auch $SO_2$ im ppm-Bereich, das sich mit dem im Prozeßgas im Überschuß vorhandenen $H_2S$ zu Schwefel umsetzt:

$$2 H_2S + So_2 \rightarrow \frac{3}{x} S_x + 2H_2O \qquad (4)$$

Für das Ausführungsbeispiel beträgt die Konzentration an $S_6/S_8$ etwa 120 ppm, die bezogen auf die gesamte Prozeßgasmenge ca. 3 kg/h elementaren Schwefel ergeben, der in nachgeschalteten Prozeßstufen bei Temperaturen unterhalb 115° C zu Verstopfungen führen würden. Das Prozeßgas wird in einem Abhitzekessel 10 auf 300° C indirekt abgekühlt, wobei aus dem Kesselspeisewasser 11 Dampf 12 erzeugt wird. Anschließend wird das Prozeßgas in einen Hydriereaktor 13 geleitet. Der im Spaltprozeß nach den Gleichungen (1) und (2) erzeugte Wasserstoff hydriert den elementaren Schwefel $S_6/S_8$ am Hydrierkatalysator 14 zu $H_2S$ nach der Gleichung

$$x H_2 + S_x \rightarrow xH_2S \qquad (5)$$

Das den Hydrierreaktor verlassende Prozeßgas 15 enthält elementaren Schwefel in einer Konzentration von < 1 ppm und kann damit, ohne weitere Prozeßstufen nach bekannten Verfahren zu beeinträchtigen, weiterverarbeitet werden, wobei die nachfolgenden Prozeßstufen beispielsweise eine selektive $H_2S$-Absorption, ein Quenchprozeß oder eine Gasmischung sein können.

Von Vorteil ist, daß bei den erfindungsgemäßen Verfahren die indirekte Kühlung des entstandenen Prozeßgases zur Dampferzeugung genutzt werden kann. Der schon beschriebene Absorptionsprozeß kann unter Nutzung der Wärme des Prozeßgases durchgeführt werden. Im Rahmen der Erfindung liegt es, das hydrierte Prozeßgas im gleichen Temperaturniveau oder nach direkter oder indirekter Kühlung einem anderen Prozeßgasstrom zur gemeinsamen Weiterverarbeitung zuzumischen.

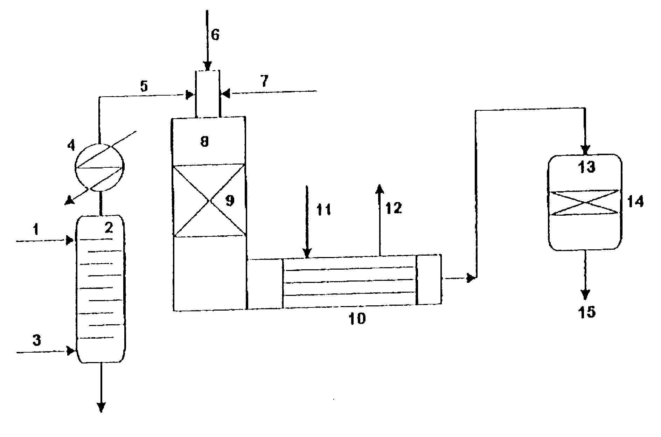

## Patentansprüche

1. Verfahren zur Behandlung von Brüden, die Ammoniak und im Bereich von 5 bis 40 Vol.-% in den trockenen Brüden Schwefelwasserstoff enthalten, insbesondere zur Behandlung von Brüden, die bei der Destillation von bei der hydrierenden Behandlung von Rohölfraktionen anfallende Prozeßwässer oder bei der Gasbehandlung in Kokereien anfallen, mit den Verfahrensschritten

1.1) die Brüden werden in einen Spaltofen eingeführt, der mit einer Temperatur im Bereich von 1000° bis 1200° C mit reduzierender Atmosphäre betrieben wird, wobei ein Prozeßgas entsteht und die Entstehung von elementarem Schwefel aus dem in den Brüden enthaltenen Schwefelwasserstoff in Kauf genommen wird,

1.2) das Prozeßgas wird über einen Spaltkatalysator geführt und das Ammoniak wird dabei zu einem Wasserstoff/Stickstoff-Gemisch gespalten,

1.3) das Prozeßgas mit dem gespaltenen Ammoniak wird auf eine Temperatur im Bereich von 250° bis 350° C abgekühlt,

1.4) das abgekühlte Prozeßgas wird über einen Hydrierreaktor geleitet und der darin enthaltene Schwefel wird zu Schwefelwasserstoff hydriert,

wobei das den Hydrierreaktor verlassende Prozeßgas der Weiterverarbeitung zugeführt wird.

2. Verfahren nach Anspruch 1, wobei das abgekühlte Prozeßgas in dem Hydrierreaktor mit einem Hydrierkatalysator in Kontakt gebracht wird.

3. Verfahren nach einem der Ansprüche 1 oder 2, wobei das hydrierte Prozeßgas einem selektiven Absorptionsprozeß unterworfen und dadurch der Schwefelwasserstoff aus dem Prozeßgas entfernt wird.

4. Verfahren nach einem der Ansprüche 1 bis 3, wobei als Spaltkatalysator ein Nickelkatalysator und/oder ein Eisenkatalysator und/oder ein Nickel/Eisen-Katalysator verwendet wird.

**5.** Verfahren nach einem der Ansprüche 2 bis 4, wobei als Hydrierkatalysator ein Katalysator der Gruppe "Ruthenium, Platin, Nickel, Kobalt, Kupfer" oder Mischungen davon oder oxidische Hydrierkontakte verwendet werden.

## Claims

**1.** A process for the treatment of vapours which contain ammonia and which contain hydrogen sulphide within the range from 5 to 40 % by volume in the dry vapours, particularly for the treatment of vapours which arise during the distillation of process water formed on the hydrogenation treatment of crude oil fractions or on the treatment of gas in coke oven plants, comprising the process steps:

1.1) the vapours are introduced into a cracking furnace which is operated at a temperature within the range from 1000° to 1200°C and under a reducing atmosphere, wherein a process gas is formed and the formation of elemental sulphur from the hydrogen sulphide contained in the vapours is accepted,

1.2) the process gas is passed over a cracking catalyst and in the course of this procedure the ammonia is cracked to form a hydrogen/nitrogen mixture,

1.3) the process gas comprising the cracked ammonia is cooled to a temperature within the range from 250° to 350°C,

1.4) the cooled process gas is passed through a hydrogenation reactor and the sulphur contained therein is hydrogenated to form hydrogen sulphide,

wherein the process gas leaving the hydrogenation reactor is supplied for further processing.

**2.** A process according to claim 1, wherein the cooled process gas is brought into contact with a hydrogenation catalyst in the hydrogenation reactor.

**3.** A process according to either one of claims 1 or 2, wherein the hydrogenated process gas is subjected to a selective absorption process and the hydrogen sulphide is thereby removed from the process gas.

**4.** A process according to any one of claims 1 to 3, wherein a nickel catalyst and/or an iron catalyst and/or a nickel/iron catalyst is used as the cracking catalyst.

**5.** A process according to any one of claims 2 to 4, wherein a catalyst from the group comprising ruthenium, platinum, nickel, cobalt, copper or mixtures thereof, or oxidic hydrogenation contact catalysts, are used as the cracking catalyst.

## Revendications

**1.** Procédé pour le traitement de vapeurs qui contiennent de l'ammoniac et du sulfure d'hydrogène dans le domaine de 5 à 40% en volume dans les vapeurs sèches, en particulier pour le traitement de vapeurs que l'on obtient lors de la distillation d'eaux issues de procédés industriels obtenues lors du traitement par hydrogénation de fractions de pétrole brut ou lors du traitement des gaz dans des cokeries, comprenant les étapes opératoires dans lesquelles

1.1) on introduit les vapeurs dans un four de craquage que l'on entraîne sous atmosphère réductrice à une température dans le domaine de 1000° à 1200°C, dans lequel on obtient des gaz issus du procédé et an prend en compte la formation de soufre élémentaire à partir du sulfure d'hydrogène contenu dans les vapeurs,

1.2) on guide les gaz issus du procédé par-dessus un catalyseur de craquage et on décompose l'ammoniac en l'occurrence pour obtenir un mélange hydrogène/azote,

1.3) on refroidit les gaz issus du procédé contenant l'ammoniac à l'état décomposé, a une température dans le domaine de 250° à 350°C,

1.4) on guide les gaz refroidis issus du procédé à travers un réacteur d'hydrogénation et on soumet à une hydrogénation le soufre qui y est contenu pour obtenir du sulfure d'hydrogène,

dans lequel on achemine au traitement ultérieur les gaz issus du procédé quittant le réacteur d'hydrogénation.

2. Procédé selon la revendication 1, dans lequel on amène les gaz refroidis issus du procédé dans le réacteur d'hydrogénation en contact avec un catalyseur d'hydrogénation.

3. Procédé selon l'une quelconque des revendications 1 ou 2, dans lequel on soumet les gaz hydrogénés issus du procédé à un processus d'absorption sélectif et on élimine ainsi le sulfure d'hydrogène hors des gaz issus du procédé.

4. Procédé selon l'une quelconque des revendications 1 à 3, dans lequel on utilise, à titre de catalyseur de craquage, un catalyseur de nickel et/ou un catalyseur de fer et/ou un catalyseur de nickel/fer.

5. Procédé selon l'une quelconque des revendications 2 à 4, dans lequel on utilise, à titre de catalyseur d'hydrogénation, un catalyseur choisi parmi le groupe comprenant le "ruthénium, le platine, le nickel, le cobalt, le cuivre" ou des mélanges de ces derniers ou encore des catalyseurs d'hydrogénation travaillant par voie d'oxydation.